# EUROPÄISCHE PATENTSCHRIFT

(11) **EP 0 428 637 B1**
(45) Veröffentlichungstag und Bekanntmachung des Hinweises auf die Patenterteilung: **01.12.1993**
(21) Anmeldenummer: 90904781.3
(22) Anmeldetag: 02.04.1990
(51) Int. Cl.: G01B 5/00

(54) **VERSTELLBARER MESSUHRHALTER ZUM FEINSTELLEN EINER MESSUHR**
ADJUSTABLE HOLDER FOR THE FINE ADJUSTMENT OF A DIAL GAUGE
PORTE-COMPARATEUR REGLABLE POUR L'AJUSTAGE DE PRECISION D'UN COMPARATEUR A CADRAN

(30) Priorität: 18.05.1989 CH 1864/89
(43) Veröffentlichungstag der Anmeldung: 29.05.1991
(73) Patentinhaber: TEKUSA AG, CH-8953 Dietikon (CH)
(72) Erfinder: MEIER, Daniel, CH-8968 Mutschellen (CH)
(74) Vertreter: Felber, Josef
(86) Internationale Anmeldenummer: CH9000086
(87) Internationale Veröffentlichungsnummer: WO9014573

(56) Entgegenhaltungen:
- US-A- 3 477 675
- US-A- 3 612 456

## Beschreibung

Die vorliegende Erfindung betrifft einen verstellbaren Messuhrhalter zum stabilen Festhalten und Feinstellen einer Messuhr. Messuhren werden insbesondere zum Ausmessen von mechanischen und feinmechanischen Bearbeitungen verwendet. Sie sind mit einem Fühlhebel ausgerüstet, welcher an der eigentlichen Messuhr schwenkbar gelagert ist. Eine feine, hochpräzise Mechanik setzt das Mass der Schwenkung des Fühlhebels um seine Schwenkachse in eine entsprechende Anzeige an der Messuhr um. Die Spitze des Fühlhebels läuft in eine kleine Kugel aus, deren Oberfläche den jeweiligen Berührungspunkt bildet. Die Fühlhebelkugel der Messuhr muss mit höchster Präzision an den auszumessenden Punkt herangeführt und dort möglichst stabil fixiert werden. Die Messuhr ist meist an einem Stativ angebaut, dessen Gelenkigkeit und Feststellbarkeit es erlaubt, die Spitze des Fühlhebels der Messuhr in einer ersten Grobeinstellung einigermassen nahe an den als Referenz dienenden Messpunkt heranzuführen und dort stabil festzuhalten. Die Messuhr hat eine Skala, welche von einem Nullpunkt aus in eine positive und negative Richtung weiterläuft. Um eine bestimmte Messung vorzunehmen, wird vorerst die Messuhr durch Feinstellen am Messuhrhalter erst auf die Anzeige Null einjustiert. Eben hierzu wird ein verstellbarer Messuhrhalter verwendet, der am Ende des Stativarmes angebaut ist und die Messuhr trägt. Mittels dieses Messuhrhalters kann die Kugel an der Fühlhebelspitze in Berührung mit dem Messpunkt gebracht werden und derart weiterreguliert werden, dass die Messuhr den Messwert Null anzeigt. Damit ist der Messpunkt mit höchster Genauigkeit definiert und die Messung kann erfolgen.

Herkömmliche Messuhrhalter weisen zwei getrennte Schenkelstücke auf, die über einen Achsbolzen schwenkbar miteinander verbunden sind. Die Schenkel werden kraft einer Feder in einer definierten Endlage gehalten. Mittels einer Feinstellschraube können die Schenkel gegen die Kraft der Feder geschwenkt werden. Der eine Schenkel ist fest mit dem Trägerstativ verbunden, während durch die Schwenkung der andere ausschwenkt und durch Zurückdrehen der Feinstellschraube kraft der Feder wieder einschwenkt. An diesem anderen Schenkel ist die Messuhr befestigt. Durch das Ein- und Ausschwenken dieses Schenkels wird die Messuhr und ihr Fühlhebel bewegt.

Der Nachteil herkömmlicher Messuhrhalter besteht darin, dass durch die zweiteilige Bauweise unweigerlich ein Toleranzspiel entsteht. Obwohl versucht wird, die Teile möglichst spielfrei und satt auf dem Achsbolzen zu lagern und die beiden Schenkel unter ständigem Federdruck stehen, besteht ein unvermeidliches Spiel zwischen den beiden Schenkeln, zumindest in deren Querachse. Ein spielfreier Zusammenbau würde die Verklemmung der beiden Teile bedeuten und eine Feinjustierung wäre nicht mehr möglich, denn der Federdruck müsste sehr hoch sein, um die Klemmwirkung noch überwinden zu können. Damit bei diesen zweiteiligen Messuhrhaltern die Kräfteverhältnisse für eine Feinjustierung optimiert sind, ist die Feinstellschraube, welche den einen Schenkel durchsetzt und mit ihrer Spitze die Innenseite des anderen Schenkels berührt, möglichst weit weg vom Achsbolzen angeordnet. Damit ist eine kleine Uebersetzung gewährleistet und eine entsprechend feine Justierung wird ermöglicht. Das Erfordernis, dass der Hebelpunkt, wo also die Spitze der Feinstellschraube die Innenseite des Schenkels mit Druck beaufschlagt, möglichst weit von der Schwenkachse entfernt sein muss, bedingt aber eine verhältnismässig lange Auslegung der Schenkel und damit eine entsprechend grosse Dimensionierung des Messuhrhalters. Je länger aber wiederum die Schenkel sind, umso geringer ist die Stabilität.

Es ist ein Messuhrhalter bekannt, bei welchem die Schenkel von einem gemeinsamen, einstückigen Formstück gebildet sind. Das Formstück weist an der Stelle, wo es die beiden Schenkel verbindet, eine Dünnstelle auf, die dann als Schwenkachse wirkt, wobei die Elastizität des Materials ausgenützt wird, aus dem das Formstück besteht. Die beiden Schenkel verlaufen von der Schenkelwurzel aus zuerst parallel zueinander. Vor dem Ende des kürzeren Schenkels ist der längere rechtwinklig weg vom kürzeren Schenkel abgebogen und erstreckt sich in dieser Richtung nochmals um etwa die gleiche Länge, die der kürzere Schenkel insgesamt aufweist. Der recktwinklige Schenkel ist an der Spitze seines rechten Winkels abgeplattet. Im entspannten Zustand, in dem die Schenkel relativ geschlossen sind, beaufschlagt eine Feinstellschraube die Abplattung im rechten Winkel zu ihr. Die Feinstellschraube selbst durchsetzt das Ende des kürzeren Schenkels in einem entsprechende Winkel zu dessen Schenkelachse, sodass der Winkel zwischen der Feinstellschraube und der Schenkelachse des kür2eren Schenkels in Richtung zur Schenkelwurzel hin etwa 45 Winkelgrade ausmacht. Dieser Messuhrhalter wird im Bereich der Schenkelwurzel am Stativ angebaut, während das Ende des rechtwinkligen Schenkels die Messuhr trägt. Bei der Feineinstellung kommen nun zwei gravierende Nachteile dieses Messuhrhalter zutage. Zum einen greift die konisch ausgebildete Spitze der Feinstellschraube zu Beginn der Schwenkung der beiden Schenkel vorerst exzentrisch in einen Gegenkonus an einer Abplattung des anderen Schenkels. Mit zunehmender Schwenkung der Schenkel wandert die Spitze der Feinstellschraube der Mantellinie des Gegenkonus entlang Richtung Zentrum. Dies verursacht grosse Gleitreibungskräfte, insbesondere grosse seitwärts wirkende Kräfte auf den abzuschwenkenden Schenkel. Diese seitwärts wirkenden Kräfte wiederum wirken an der Feinstellschraube als Radialkräfte, was bedeutet, dass das Feingewinde schnell ausläuft, das heisst zu viel Spiel bekommt.

Zum anderen besteht der noch wesentlichere Nachteil dieser Konstruktion darin, dass die beiden Schenkelenden mit der Schenkelwurzel ein annähernd gleichseitiges Dreieck bilden. Infolge dieser ausgeprägten Dreiecksanordnung bewirkt das Ausschwenken des rechtwinkligen Schenkels am horizontal montierten Messuhrhalter nicht nur eine Abwärtsbewegung der angebauten Messuhr und deren Fühlhebels, sondern die Fühlhebelspitze wird unvermeidlich auch deutlich in horizontaler Richtung nach vorne ausgefahren. Dieser Umstand erschwert das Heranfahren der Fühlhebelspitze an einen gewünschten Messpunkt am Werkstück erheblich.

Aus der US-A-3'612'456 ist ein Messuhrhalter bekannt, der aus einem einstückigen Formstück besteht. Der kürzere Schenkel ist von einer Verstellschraube durchsetzt, welche in eine Gewinde im gegenüberliegenden, längeren Schenkel eingreift. Der längere Schenkel trägt die Messuhr. Zum Messen wird der Messuhrhalter durch Zusammenziehen der Schenkel mittels der Verstellschraube vorgespannt. Die Messuhr mit ihrem Fühlhebel auf das Werkstück abgesenkt, indem die Vorspannung mit der Verstellschraube wieder langsam gelöst wird. Nebst der gewünschten Vertikalbewegung des Fühlhebels macht dieser infolge dieser Anordnung unweigerlich einen relaitiv grossen Weg in Horizontalrichtung, was jedoch unerwünscht ist. Aus der US-A-3'477'675 ist andrerseits ein mehrteiliger Sockelfuss bekannt, auf dem ein vertikaler und einen horizontaler Träger aufgebaut ist, wobei der letztere die Fühlhebelmessuhr trägt. Diese Justiereinrichtung übernimmt hier die Rolle eines Statives, indem die Fühlhebelmessuhr vertikal und horizontal grob verschoben werden kann. Mittel zur Feinjustierung sind nur beschränkt vorhanden, da mit der Justiereinrichtung des Sockelfusses in bezug auf die Messuhr grosse Hebel bewegt werden.

Zum Regulieren und Feinjustieren einer Fühlhebelmessuhr sind diese beiden vorbekannten Vorrichtungen nicht optimal geeignet, da es hier sehr wichtig ist, dass der Messuhrhalter die Fühlhebelspitze beim Justieren möglichst in der gleichen Richtung bewegen soll, wie diese Spitze durch die Bewegung des Fühlhebels selbst bewegt wird. Die Fühlhebelspitze sollte deshalb möglichst in der Verlängerung der Messuhrhalterungsbefestigung angeordnet sein und gleichzeitig sollte der Messuhrhalter möglichst kompakt sein und spielfrei arbeiten.

Es ist die Aufgabe der vorliegenden Erfindung, einen Messuhrhalter zu schaffen, welcher weniger Toleranzspiel aufweist, kompakter gebaut ist, grössere Stabilität gewährleistet und feinere Justierungen mit einfacher Handhabung erlaubt.

Diese Aufgabe wird gelöst von einem verstellbarer Messuhrhalter zum Feinstellen einer Messuhr aus einem einteiligen Formstück, welches zwei gegeneinander unter Spannkraft verschwenkbare Schenkel einschliesst und Mittel zum Anbau an ein Messuhrenstativ sowie Mittel zum Befestigen einer Messuhr aufweist und sich dadurch auszeichnet, dass das Formstück so ausgebildet ist, dass in der entspannten Lage des Formstückes das Ende des einen Schenkels jenes des anderen über dessen bezüglich seiner Aussenseite im wesentlichen parallelen Längsachse hinaus so vordergreift, dass die Messuhr beziehungsweise ihr Fühlhebel ungefähr in Verlängerung der Hauptachse des kürzeren Schenkels am längeren Schenkel befestigtbar ist.

In den Zeichnungen werden zwei Ausführungsvarianten des erfindungsgemässen Messuhrhalters gezeigt und in der nachfolgenden Beschreibung werden diese Ausführungen im einzelnen beschrieben und ihre Funktion erläutert.

Es zeigt:
- Figur 1: eine erste Variante des Messuhrhalters in entspannter Lage in Seitenansicht;
- Figur 2: den Messuhrhalter nach Figur 1 mit aufgesetzter Messuhr in einer Justierlage in Seitenansicht;
- Figur 3: eine zweite Variante des Messuhrhalters mit aufgesetzter Messuhr in einer Justierlage in Seitenansicht.

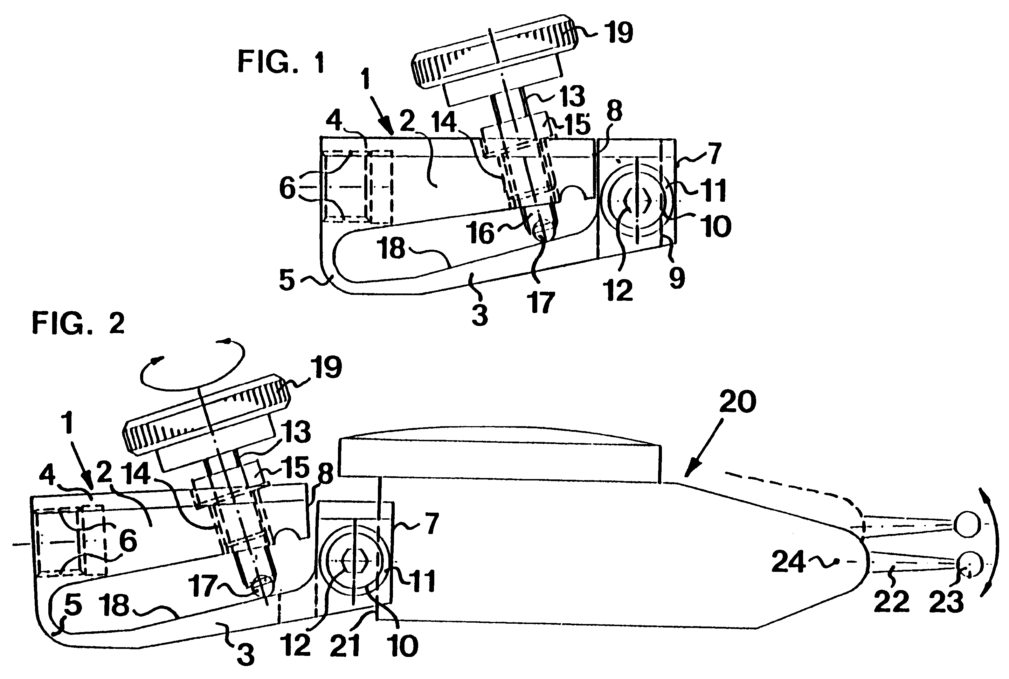

Die Figur 1 zeigt eine erste Variante des erfindungsgemässen Messuhrhalters, welche sich durch einen besonders einfachen Aufbau auszeichnet. Der Messuhrhalter besteht hier im wesentlichen aus einem einstückigen Formstück 1, welches eine solche schlitzartige Aussparung aufweist, dass zwei Schenkel 2,3 gebildet werden, von denen der eine 2 kürzer als der andere 3 ist. Mit seinen Aussenkonturen bildet das Formstück einen im wesentlichen trapezförmigen Kubus. Die Flanken der Schenkel 2,3 sind eben und die anderen Begrenzungsflächen des Formstückes stehen senkrecht zu diesen Flankenebenen. Einzig die oberen Seitenkanten 4 sind zu den Flanken hin abgeschrägt. Die beiden Schenkel 2,3 sind über eine Dünnstelle 5 miteinander verbunden. Durch diese Dünnstelle 5 kommt die Elastizität des Formstück-Materials zum Tragen, sodass die beiden Schenkel 2,3 zueinander um den Bereich der Dünnstelle 5 elastisch schwenkbar sind. Die Dünnstelle 5 bildet gleichzeitig die Schenkelwurzel 5 der beiden Schenkel 2,3. Der kürzere Schenkel 2 weist nahe seiner Schenkelwurzel 5 eine Gewindebohrung 6 auf, die auf einen am Ende eines Stativarmes sitzenden Gewindebolzen aufzuschrauben bestimmt ist. Die Bohrachse jener Gewindebohrung 6 verläuft in etwa längs der Hauptachse des kürzeren Schenkels 2. Der andere, längere Schenkel 3 ist dünner als der Schenkel 2 ausgeführt, um den Messuhrhalter möglichst kompakt zu halten. In der hier gezeigten Figur 1 sieht man den Messuhrhalter von der Seite her und zwar in seiner entspannten Lage. Das heisst, das Formstück steht unter keinerlei Materialspannung. In dieser Lage vordergreift nun das Ende 7 des längeren Schwenkels 3, welches Mittel zum Anbau einer Messuhr aufweist, das Ende 8 des kürzeren Schenkels 2 in dessen Längsachse so, dass die Messuhr beziehungsweise ihr Fühlhebel 22,23 ungefähr in Verlängerung der Hauptachse des kürzeren Schenkels 2 am längeren Schenkel 3 befestigtbar ist. Unter dieser Längsasche des kürzeren Schenkels 2 sei dabei eine im wesentlichen parallel zur Aussenseite des kürzeren Schenksl 2 verlaufende Achse verstanden. Dieses ist ein wesentliches Merkmal des erfindungsgemässen Messuhrhalters. Gerade dieses Merkmal ermöglicht es nämlich, die eigentliche Messuhr beziehungsweise ihren Fühlhebel in der direkten Verlängerung der Achse des Gewindebolzens am Stativ zu befestigen, wie das später anhand von Figur 2 deutlich wird. Die Anordnung der als Schwenkachse wirkenden Dünnstelle 5 beziehungsweise der Schenkelwurzel 5 so nahe an der Gewindebohrung 6, welche ja die Mittel zum Befestigen des Messuhrhaltes am Stativ darstellen, macht es möglich, dass die Schwenkung des Fühlhebels der angebauten Messuhr annähernd so erfolgen kann, als wäre die Schwenkachse des Fühlhebels direkt auf der Achse des Gewindebolzens am Stativ gelegen, wie das ebenfalls später anhand der Figur 2 noch genauer einsehbar sein wird. Die Mittel zum Befestigen der Messuhr am Ende 7 des längeren, das Ende des kürzeren Schenkels 2 so vordergreifenden Schenkels 3 sind hier durch einen nicht einsehbaren Schlitz im Endbereich des Schenkels 3, welcher Schlitz in der Zeichnungsblattebene verläuft, gegeben. An seinem Rand weist dieser Schlitz im Querschnitt gesehen das Negativprofil eines Schwalbenschwanzes auf. Das Schwalbenschwanz-Profilende ist durch die gestrichelte Linie 9 angegeben. Der Schlitz ist von einer Querschraube 10 durchsetzt, welche einen Schraubenkopf mit Imbus-Sechskant 12 trägt, der auf der Unterlagsscheibe 11 aufliegt. Mittels dieser Schraube 10 lassen sich die Flanken des Schlitzes gegeneinander verspannen. Dadurch lässt sich das schwalbenschwanzförmige Anbau-Ende der Messuhr im Schlitz unverrückbar festklemmen. Der kürzere Schenkel 2 ist von einer Feinstellschraube 13 durchsetzt, die mit einem äusserst feinen Gewinde versehen ist. Genauer gesagt sitzt vorerst eine Gewindebrosche 14 mit aussen etwas gröberem Gewinde im Schenkel 2. Jene Gewindebrosche 14 trägt einen Sechskant-Schraubenkopf 15, der wie auch ihre Innenseite ein zum Gewinde der Feinstellschraube 13 passendes Innengewinde aufweist. In diesem Innengewinde sitzt dann die Feinstellschraube 13. Sollte das Gewinde einmal durch Verschleiss auslaufen, so kann die Gewindebrosche 14 leicht ausgewechselt werden. In der Spitze 16 der Feinstellschraube 13 sitzt fest mit ihr verbunden eine gehärtete Stahlkugel 17. Die Feinstellschraube 13 berührt sodann mit ihrer Kugel 17 die Innenseite 18 des längeren Schenkels 3. Zum feinen Drehen der Feinstellschraube 13 ist diese mit einem Schraubenkopf ausgerüstet, welcher ein gerändeltes Rädchen 19 von verhältnismässig grossem Durchmesser trägt. Dieser Durchmesser ist jedoch nicht grösser, als dass das Rädchen immer noch bequem mit zwei oder drei Fingern gedreht werden kann. Wird nun die Feinstellschraube 13 im entspannten Zustand des Messuhrhalters in Richtung zum längeren Schenkel 3 hin eingeschraubt, so wird dieser gegen die durch die Elastizität des Formstückes an der Dünnstelle gegebene Federkraft vom kürzeren Schenkel 2 weggeschwenkt. Diese Schwenkung erfolgt um den Federbereich, welcher durch die Dünnstelle 5 gebildet ist. Durch die in Anbetracht der kompakten Bauart des ganzen Messuhrhalters grosse Distanz zwischen dem Kraftpunkt, an dem die Spitze 16 beziehungsweise die Kugel 17 der Feinstellschraube 13 punktuell angreift, und der Dünnstelle 5, wird ein entsprechend günstiges Uebersetzungsverhältnis geschaffen. Die Feinstellschraube 13 wirkt ständig gegen den festen Anschlag an der Innenseite des Schenkels 3, der ja infolge der Materialelastizität immer an die Kugel 17 gedrückt wird. Die ganze Schwenkung des Schenkels 3 erfolgt absolut spielfrei, da keine Schwenkgelenke in Form von irgendwelchen Achsbolzen mit Achs- und Gegenlagern vorhanden sind. Bei relativ weiter Schwenkung gleitet die Kugel 17 der Feinstellschraube 13 auf der Innenseite 18 des Schenkels 3 leicht gegen dessen Ende 7 hin. Die Kugel gewährleistet, dass die Feinstellschraube 13 nur an einem einzigen, genau definierten Punkt die Schenkelinnenseite 18 beaufschlagt. Die auf die Feinstellschraube 13 wirkenden Querkräfte halten sich in engen Grenzen. Damit wird auch das überaus feine und deshalb empfindliche Gewinde der Feinstellschraube 13 nicht über Gebühr belastet und entsprechend weniger ausgeschlagen. Muss es trotzdem einmal ersetzt werden, so ist dies dank der Gewindebrosche 14 mit wenigen Handgriffen möglich. Die Breite der Schenkel 2,3 bestimmt massgeblich die Verwindungsstabilität dieses Messuhrhalters. Ist diese Stabilität infolge des wegfallenden Achsbolzens zwischen den beiden Schenkeln ohnehin gegenüber zweiteiligen Haltern schon erhöht, so erst recht durch eine geeignet gewählte Schenkelbreite, die vorteilhaft etwa ein Viertel der Gesamtlänge des Halters ausmacht. Ausserdem spielt die Wahl des Material für das Formstück eine wichtige Rolle. Vorteilhaft wird es komplett aus Federstahl gefertigt, der nach der mechanischen Endbearbeitung gehärtet und anschliessend auf die übliche Federhärte angelassen wird.

In Figur 2 ist der Messuhrhalter nach Figur 1 mit aufgesetzter Messuhr in einer Justierlage gezeigt. Die Messuhr 20 ist hier mit ihrem Anbau-Ende 21 in den Schlitz am Ende des Schenkels 3 eingeschoben und mittels der Schraube 10 festgeklemmt. Die Anzeige der Messuhr, von der ja hier eine Seitenansicht gezeigt ist, ist ähnlich jener einer konventionellen Armbanduhr und weist ein Zifferblatt mit einer Skala auf, welche sich von Null aus in positiver und negativer Skalenrichtung erstreckt. Im Innern der Messuhr ist ein Fühlhebel 22 schwenkbar angelenkt. Diese Schwenkachse 24 ist in der Figur angedeutet. Die Schwenkebene des Fühlhebels 22 liegt hier in der Zeichnungsblattebene. Die feinen Schwenkbewegungen des Fühlhebels 22 werden über eine Mechanik auf den Zeiger der Messuhr übertragen. An seiner Spitze ist der Fühlhebel 22 mit einer Kontaktkugel 23 ausgerüstet, die eine punktuelle und damit exakt definierte Berührung mit einer Fläche sicherstellt. Soll nun diese Kontaktkugel 23 an einen Referenzpunkt herangeführt werden, so muss das durch eine Schwenkung der Messuhr mittels des Messuhrhalters geschehen, wobei diese Schwenkung möglichst mit einer Schwenkung des Fühlhebels 22 an der Messuhr selbst gleichkommen sollte. Deshalb ist es wichtig, dass die Distanz vom Kraftpunkt, an dem die Kugel 17 den Schenkel 3 berührt, bis zum Ende dieses Schenkels 3 und damit zur Messuhr selbst möglichst klein ist, damit das durch die ganze Konstruktion des Halters gewonnene günstige Uebersetzungsverhältnis zwischen der Drehung der Feinstellschraube 13 und der Schwenkung Schenkelendes 3 nicht wieder zunichte gemacht wird. Es ist klar, dass eine Schwenkung des Schenkels 3 eine Schwenkung des Fühlhebels 22 exakt in dessen relativer Schwenkebene zur Messuhr selbst bewirkt. Das ist der eine wichtige Punkt. Ein weiterer wichtiger Punkt ist es, dass die mittels des Messuhrhalters eingeleitete Schwenkung möglichst keine Bewegung der Kontaktkugel 23 in Richtung der Fühlhebelachse bewirkt. Dieses wird einerseits durch die in jeder Stellung nahe Anordnung der Dünnstelle und damit des Scharnierbereiches des Messuhrhalters zur Verlängerung der Fühlhebelachse erreicht. Andrerseits trägt auch die unter den gegebenen Umständen weitestmögliche Zurückverlegung des Scharnierbereiches des Messuhrhalters weg von der Schwenkachse des Fühlhebels 22 zur minimalen horizontalen Bewegung der Kontaktkugel 23 bei. Mit der in Figur 2 gezeigten Anordnung kann an einem Stativ erster Güte problemlos ein Messpunkt mit einer Genauigkeit von 1/100 Millimeter reproduziert werden. Auch bei Messuhren mit einer Genauigkeit von 1/1000 Millimeter erwies sich der erfindungsgemässe Messuhrhalter als deutlich besser als herkömmliche Konstruktionen.

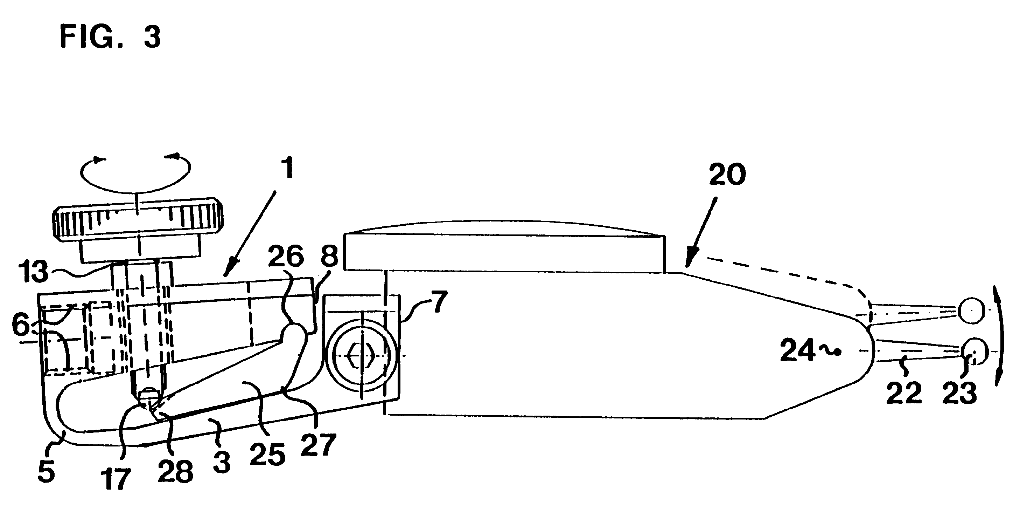

Eine noch um ein Vielfaches höhere Sensibilität konnte jedoch mit einer zweiten Variante des erfindungsgemässen Messuhrhalters erzielt werden. Figur 3 zeigt einen solchen Messuhrhalter in einer Justierlage mit angebauter Messuhr. Grundsätzlich gelten alle zur ersten Variante gemachten Erläuterungen auch für diese Ausführung. Der Unterschied besteht hier aber im deutlich verfeinerten Uebersetzungsverhältnis vom Mass der Schraubendrehung zur Schwenkbewegung des Endes des Schenkels 3. Zur Verkleinerung des Uebersetzungsverhältnisses und damit zur erheblichen Steigerung der Sensibilität ist bei dieser zweiten Ausführung eine Untersetzungs-Wippe 25 zwischen die Schenkel 2 und 3 des Formstückes 1 eingebaut, die als Kniehebel wirkt. Die Schwenkachse der Wippe 25 ist durch die Achse einer halbzylindrischen Ausformung 26 gebildet, die in einen durch eine Ausnehmung an der Innenseite des Schenkels 2 gebildeten halben Hohlzylinder einpasst. Anstelle dieser halbzylindrischen Ausnehmung kann auch eine prismatische Ausnehmung vorgesehen werden, in welcher dann die halbzylindrische Ausformung 26 gelagert sein kann. In ihrem Längsschnitt, welcher der hier gezeigten Seitenansicht entspricht, hat die Wippe 25 die Grobform eines spitzwinkligen Dreiecks. Die leicht abgerundete Dreieckspitze beim stumpfen Dreieckwinkel bildet den Lastauflagepunkt 27. Weil sich die Wippe 25 aber über die ganze Breite des Messuhrhalters erstreckt, wird eine eigentliche Lastauflagelinie quer durch das Formstück 1 gebildet. Der Kraftarm 28 ist deutlich länger als der Lastarm, sodass eine zusätzliche Untersetzung von etwa 1 : 5 erreicht wird. Die Feinstellschraube 13 wurde gegenüber der ersten Ausführung gegen die Schenkelwurzel 5 hin versetzt. Sie durchsetzt den Schenkel 2 in rechtem Winkel zur Achse der Gewindebohrung 6 und die Stahlkugel 17, welche ihre Spitze bildet, liegt auf dem Ende des Kraftarmes 28 auf. Mit dieser zusätzlich verkleinerten Uebersetzung hat diese Ausführung wohl den etwas kleineren Gesamt-Verstellbereich, besticht jedoch durch eine äusserst hohe Sensibililtät der Justierung. Diese erlaubt es erstmals, bewusst und reproduzierbar von einem tausendstel Millimenter zum nächsten gezielt zu justieren beziehungsweise einen Messpunkt zu definieren. Die Wippe 25 ist zudem in einer definierten vorgespannten Stellung des Formstückes 1 in jenes eingebaut. Somit kann die Messung direkt ab Beginn des Verstellbereiches unter Spannung und deshalb spielfrei erfolgen.

## Patentansprüche

1. Verstellbarer Messuhrhalter zum Feinstellen einer Messuhr (20) aus einem einteiligen Formstück (1), welches zwei gegeneinander unter Spannkraft verschwenkbare Schenkel (2,3) einschliesst und Mittel (6) zum Anbau an ein Messuhrenstativ sowie Mittel (9-12) zum Befestigen einer Messuhr (20) aufweist, dadurch gekennzeichnet, dass das Formstück (1) so ausgebildet ist, dass in der entspannten Lage des Formstückes (1) das Ende (7) des einen Schenkels (3) jenes (8) des anderen (2) über dessen bezüglich seiner Aussenseite im wesentlichen parallelen Längsachse hinaus so vordergreift, dass die Messuhr beziehungsweise ihr Fühlhebel (22,23) ungefähr in Verlängerung der Hauptachse des kürzeren Schenkels (2) am längeren Schenkel (3) befestigtbar ist.

2. Verstellbarer Messuhrhalter nach Anspruch 1, dadurch gekennzeichnet, dass das Formstück (1) im entspannten Zustand mit seinen Aussenkonturen einen im wesentlichen trapezförmigen Kubus bildet.

3. Verstellbarer Messuhrhalter nach Anspruch 1 oder 2, dadurch gekennzeichnet, dass die Schenkelwurzel (5) so angeordnet ist, dass die Schenkelenden (7,8) im entspannten Zustand des Halters mit der Schenkelwurzel (5) einen Winkel von weniger als 10 Winkelgraden einschliessen.

4. Verstellbarer Messuhrhalter nach einem der vorhergehen den Ansprüche, dadurch gekennzeichnet, dass die Schenkel (2,3) zueinander verschwenkbar sind, indem der kürzere, dickere Schenkel (2) von einer Feinstellschraube (13) durchsetzt ist, die mit ihrer von einer Kugel (17) geformten Spitze die Innenseite (18) des anderen Schenkels (3) annähernd rechtwinklig beaufschlagt.

5. Verstellbarer Messuhrhalter nach Anspruch 4, dadurch gekennzeichnet, dass die Feinstellschraube (13) den kürzeren Schenkel (2) durchsetzt.

6. Verstellbarer Messuhrhalter nach einem der Ansprüche 1 bis 3, dadurch gekennzeichnet, dass die Schenkel (2,3) zueinander verschwenkbar sind, indem zwischen ihnen eine als Kniehebel wirkende Wippe (25) angeordnet ist, die nahe dem Schenkelende (8) des kürzeren, dickeren Schenkels (2) an dessen Innenseite senkrecht zur Schwenkebene der Schenkel (2,3) schwenkbar gelagert ist, und dass deren als Lastarmende zu wirken bestimmter Scheitel (27) den anderen, längeren Schenkel (3) nahe seines Endes (7) berührt, während ihr als Kraftarmende zu wirken bestimmtes Ende von der durch eine Kugel (17) gebildete Spitze einer Feinstellschraube (13) beaufschlagt ist, welche den kürzeren Schenkel (2) durchsetzt.

7. Verstellbarer Messuhrhalter nach Anspruch 6, dadurch gekennzeichnet, dass das Formstück (1) ebene Schenkelflanken bildet, welche die Schenkelbreiten begrenzen und die je zueinander parallel stehen, und dass die Wippe (25) von solcher Breite ist, dass ihre seitlichen Flanken in der Ebene der Schenkelflanken liegen, und dass das als Kraftarmende zu wirken bestimmte Ende der Wippe (25) an seiner Innenseite eine in Längsrichtung der Wippe (25) verlaufende Kerbe mit Dreieckquerschnitt aufweist, sodass die als Spitze der Feinstellschraube (13) wirkende Kugel (17) die Innenseiten der Kerbe je an einem Punkt beaufschlagt.

8. Verstellbarer Messuhrhalter nach einem der Ansprüche 4 bis 7, dadurch gekennzeichnet, dass die Spitze der Feinstellschraube (13) durch eine fest mit dem Schraubenkörper (13) verbundene Kugel (17) gebildet ist.

9. Verstellbarer Messuhrhalter nach einem der Ansprüche 4 bis 8, dadurch gekennzeichnet, dass die Feinstellschraube (13) in einer Gewindebrosche (14) gehalten ist, welche auswechselbar in den Schenkelkörper (2) eingeschraubt ist.

10. Verstellbarer Messuhrhalter nach einem der vorhergehen den Ansprüche, dadurch gekennzeichnet, dass die Mittel (6) zum Anbau des Halters an ein Stativ eine nahe der Schenkelwurzel (5) angeordnete Gewindebohrung (6) einschliessen und die Mittel (9-12) zum Befestigen der Messuhr (20) einen am Schenkelende (7) des längeren, vordergreifenden Schenkels (3) in dessen Schwenkebene verlaufenden Längsschlitz einschliessen, dessen endseitige Mündung die Negativform eines Schwalbenschwanzes aufweist, wobei der Schlitz von einer Querschraube (10) durchsetzt ist, mittels welcher die beiden Flanken des Schlitzes zueinander vorspannbar sind.

## Claims

1. An adjustable dial indicator holder for finely adjusting a dial indicator (20) made from a one-piece shaped part (1) comprising two limbs (2, 3) which can be pivoted against each other under elastic force and having means (6) for mounting onto a dial indicator stand as well as means (9-12) for attaching a dial indicator (20), characterized in that the formed part (1) is designed such that when the formed part (1) is in the relaxed position, the end (7) of one limb (3) reaches to the front of that (8) of the other (2) beyond its longitudinal axis, which is essentially parallel with respect to its outer side, in such a way that the dial indicator resp. its feeler (22, 23) can be attached to the longer limb (3) in an approximate prolongation of the main axis of the shorter limb (2).

2. The adjustable dial indicator holder of claim 1, characterized in that in the relaxed state, the shaped part (1) forms an essentially trapezoidal cube with its outer edges.

3. The adjustable dial indicator holder of claim 1 or 2, characterized in that the limb root (5) is disposed such that when the holder is in the relaxed state, the limb ends (7, 8) encompass an angle of less than 10° with the limb root (5).

4. The adjustable dial indicator of one of the preceding claims, characterized in that the limbs (2, 3) can be pivoted towards each other, the shorter, thicker limb (2) being penetrated by a fine adjustment screw (13) which, with its tip formed by a sphere (17), comes into contact with the inside (18) of the other limb (3) at almost a right angle.

5. The adjustable dial indicator of claim 4, characterized in that the fine adjustment screw (13) penetrates the shorter limb (2).

6. The adjustable dial indicator holder of one of claims 1 to 3, characterized in that the limbs (2, 3) can be pivoted towards each other, a rocker (25) acting as a knuckle joint being disposed between them, said rocker being pivotably mounted near the limb end (8) of the shorter, thicker limb (2) on its inside perpendicular to the plane of pivot of the limbs (2, 3), and in that its vertex (27) which is intended to function as the load arm end touches the other, longer limb (3) close to its end (7), whilst the end intended to function as the power arm end comes into contact with the spherical tip (17) of a fine adjustment screw (13) which penetrates the shorter limb (2).

7. The adjustable dial indicator of claim 6, characterized in that the shaped part (1) forms level limb sides which limit the limb widths and which are each parallel to each other, and in that the rocker (25) is of such a width that its lateral sides lie along the plane of the limb sides, and in that the end of the rocker (25) intended to function as the power arm end has on its inside a notch of a triangular cross-section running in the longitudinal direction of the rocker (25), so that the sphere (17) acting as the tip of the fine adjustment screw (13) comes into contact with each of the inner surfaces of the notch at one point.

8. The adjustable dial indicator of one of claims 4 to 7, characterized in that the tip of the fine adjustment screw (13) is formed by a sphere (17) which is rigidly connected to the screw element (13).

9. The adjustable dial indicator of one of claims 4 to 8, characterized in that the fine adjustment screw (13) is held in a threaded runner (14) which is interchangeably screwed into the limb element (2).

10. The adjustable dial indicator of one of the preceding claims, characterized in that the means (6) for mounting the holder onto a stand comprise a threaded bore (6) disposed close to the limb root (5) and the means (9-12) for attaching the dial indicator (20) comprise a longitudinal slot at the limb end (7) of the longer afore-reaching limb (3) running along the latter's plane of pivot, whose end-side opening has the negative shape of a dovetail, the slot being penetrated by a transverse screw (10) by means of which the two sides of the slot can be pre-tensioned to each other.

## Revendications

1. Support réglable de comparateur pour l'ajustage d'un comparateur (20), constitué par une pièce d'un seul tenant moulée (1), qui comprend deux branches (2, 3), pouvant pivoter l'une par rapport à l'autre sous l'action d'une force de serrage, ainsi que des moyens (6) pour disposer le support sur une monture de comparateur et des moyens (9 à 12) de fixation d'un comparateur (20), caractérisé en ce que la pièce moulée (1) est réalisée de sorte que, dans la position desserrée de cette pièce moulée (1), l'extrémité (7) d'une branche (3) dépasse l'extrémité (8) de l'autre (2) au-delà de son axe longitudinal parallèle pour l'essentiel à sa face extérieure, de sorte que le comparateur et/ou son palpeur (22, 23) est fixable sur la branche la plus longue (3), approximativement dans le prolongement de l'axe principal de la branche la plus courte (2).

2. Support réglable de comparateur suivant la revendication 1, caractérisé en ce que la pièce moulée (1) forme, à l'état desserré, avec ses contours extérieurs, un cube essentiellement trapézoïdal.

3. Support réglable de comparateur suivant la revendication 1 ou 2, caractérisé en ce que la naissance (5) des branches est disposée de telle sorte que, dans l'état desserré du support, les extrémités (7, 8) des branches du support forment avec la naissance (5) des branches un angle de moins de 10 degrés.

4. Support réglable de comparateur suivant une des revendications précédentes, caractérisé en ce que les branches (2, 3) peuvent pivoter l'une par rapport à l'autre, en ce que la branche la plus courte et la plus épaisse (2) est traversée par une vis micrométrique (13), qui agit, avec sa pointe formée par une bille (17), approximativement perpendiculairement sur la face intérieure (18) de l'autre branche (3).

5. Support réglable de comparateur suivant la revendication 4, caractérisé en ce que la vis micrométrique (13) traverse la branche la plus courte (2).

6. Support réglable de comparateur suivant une des revendications 1 à 3, caractérisé en ce que les branches (2, 3) peuvent pivoter l'une par rapport à l'autre, en ce qu'il est disposé entre elles un bras coudé (25), agissant comme une genouillère et logé pivotant, près de l'extrémité (8) de la branche (2) la plus courte et la plus épaisse, sur sa face intérieure et perpendiculairement à l'axe de pivotement des branches (2, 3), cependant que le coude (27) du bras coudé, destiné à agir comme une extrémité de bras de levier, touche l'autre branche (3) la plus longue près de son extrémité (7), cependant que son extrémité, destinée à agir comme une extrémité de bras de levier, est sous l'action de la pointe - constituée par une bille (17) - d'une vis micrométrique (13), qui traverse la branche la plus courte (2).

7. Support réglable de comparateur suivant la revendication 6, caractérisé en ce que la pièce moulée (1) a des flancs de branches plans, limitant les largeurs de branches et disposés parallèlement entre eux, que le bras coudé (25) est d'une largeur telle que ses flancs latéraux sont dans le plan des flancs de branches et que l'extrémité du bras coudé (25), destinée à agir comme une extrémité de bras de levier comporte sur sa face intérieure une entaille de section triangulaire disposée dans la longueur du bras coudé (25), de sorte que la bille (17) formant la pointe de la vis micrométrique (13) agit chaque fois en un point sur les faces intérieures de l'entaille.

8. Support réglable de comparateur suivant une des revendications 4 à 7, caractérisé en ce que la pointe de la vis micrométrique (13) est formée par une bille (17) fixé au corps de vis (13).

9. Support réglable de comparateur suivant une des revendications 4 à 8, caractérisé en ce que la vis micrométrique (13) est maintenue dans une broche filetée (14), qui est interchangeable et vissée dans le corps de branche (2).

10. Support réglable de comparateur suivant une des revendications précédentes, caractérisé en ce que les moyens (6) pour disposer le support sur une monture comprennent un taraudage (6) proche de la naissance (5) des branches et que les moyens (9 à 12) de fixation du comparateur (20) comprennent une fente longitudinale, s'étendant à l'extrémité (7) de la branche la plus longue (3) dépassante, dans son plan de pivotement, cependant que l'embouchure - placée du côté de l'extrémité - de cette fente longitudinale présente la forme négative d'une queue-d'aronde, la fente étant traversée par une vis transversale (10), au moyen de laquelle les deux flancs de la fente peuvent être serrés entre eux à l'avance.
